# EUROPÄISCHE PATENTSCHRIFT

(11) **EP 1 022 634 B1**
(45) Veröffentlichungstag und Bekanntmachung des Hinweises auf die Patenterteilung: **11.11.2009**
(21) Anmeldenummer: 00100534.7
(22) Anmeldetag: 12.01.2000
(51) Int. Cl.: G05D 23/13

(54) **Kartusche für Sanitärarmaturen**
Cartridge for sanitary fittings
Cartouche pour robinetterie sanitaire

(30) Priorität: 19.01.1999 DE 19901851
(43) Veröffentlichungstag der Anmeldung: 26.07.2000
(73) Patentinhaber: Hansgrohe AG, 77761 Schiltach (DE)
(72) Erfinder: Lorch, Werner, 78713 Schramberg (DE)
(74) Vertreter: Patentanwälte Ruff, Wilhelm, Beier, Dauster & Partner

(56) Entgegenhaltungen:
- EP-A- 0 560 737
- WO-A-98/35280
- CH-A- 648 390
- DE-A- 2 804 803
- US-A- 5 340 018

## Beschreibung

Es ist bekannt, die eigentlichen Steuerelemente für ein Sanitärventil als Kartusche auszubilden, die dann in den Armaturenkörper eingesetzt werden kann.

Es ist bereits ein Thermostatmischventil bekannt (WO 98/35280), bei dem eine Scheibensteuerung drei Scheiben aufweist. Diese Scheiben können herausgenommen und wieder eingesetzt werden.

Der Erfindung liegt die Aufgabe zugrunde, eine Kartusche zu schaffen, die bei kompaktem Aufbau die Möglichkeit bietet, unterschiedliche Arten von Sanitärarmaturen mit geringem Aufwand zu verwirklichen.

Zur Lösung dieser Aufgabe schlägt die Erfindung eine Kartusche mit den Merkmalen des Anspruchs 1 vor. Weiterbildungen der Erfindung sind Gegenstand der abhängigen Ansprüche, deren Wortlaut ebenso wie der Wortlaut der Zusammenfassung durch Bezugnahme zum Inhalt der Beschreibung gemacht wird.

Um die Kartusche an unterschiedliche Aufgaben anzupassen, ist es nur erforderlich, einen Teil der Steuereinrichtung, gegebenenfalls auch mehrere Teile der Steuereinrichtung, auszutauschen.

Der das Kartuschengehäuse abschließende Boden dient dazu, die Verbindung zwischen den Wasserführungen der Steuereinrichtung und den Kanälen in dem Armaturenkörper herzustellen. Die Vielseitigkeit der von der Erfindung vorgeschlagenen Kartusche wird noch weiter verbessert, wenn auch der Boden ausgetauscht werden kann. Durch den Austausch des Bodens ist es sowohl möglich, eine Kartusche zu ändern und in dem gleichen Armaturenkörper anzuordnen, als auch die ungeänderte Kartusche für eine andere Armatur zu verwenden.

Erfindungsgemäß kann in Weiterbildung der Erfindung vorgesehen sein, dass die Drehbewegung des Verteilergehäuses durch einen Anschlag begrenzt wird. Hier ist es nun besonders sinnvoll, diesen beispielsweise an dem Verteilergehäuse angebrachten Anschlag mit einem Teil der Steuereinrichtung zusammenwirken zu lassen, der zur Wirkung einer unterschiedlichen Charakteristik des Ventils ausgetauscht wird.

Erfindungsgemäß kann in der Kartusche ein Thermostat angeordnet sein.

In Weiterbildung kann vorgesehen sein, dass in dem Verteilergehäuse ein Verteiler angeordnet ist, der Wasserführungen aufweist, durch die das in das Ventil eingeleitete Wasser beispielsweise zu dem Thermostaten strömt, und von dort auch wieder zu der Steuereinrichtung und dem Kartuschenboden zurück.

Die Erfindung schlägt vor, dass das Wasser axial in die Kartusche gelangt und es auch axial wieder verlässt. Damit kann erreicht werden, dass die Kartusche platzsparend und kompakt aufgebaut wird und auch in ein kompaktes Armaturengehäuse eingesetzt werden kann. In axialer Richtung steht üblicherweise viel Platz zur Verfügung.

Erfindungsgemäß kann vorgesehen sein, dass die Steuereinrichtung ein Scheibensystem aufweist. Solche Scheibensysteme sind bei Einhebelmischventilen und sonstige Ventilen bekannt. Sie enthalten im Normalfall eine feststehende Steuerscheibe, die auch als Verteilerscheibe bezeichnet wird, sowie eine mit dieser in Kontakt stehende bewegbare Steuerscheibe. Die Erfindung schlägt hier insbesondere vor, dass die bewegbare Steuerscheibe um eine feste Achse verdrehbar ausgebildet sein kann. Die Verdrehung kann direkt durch das Verteilergehäuse erfolgen. Mit dem Verteilergehäuse kann ein Betätigungselement beispielsweise in Form eines Drehgriffs in Verbindung stehen.

Erfindungsgemäß kann die Steuereinrichtung eine Mengensteuerung aufweisen, bei der also die Betätigung zu einer Änderung des Strömungsquerschnitts und damit zu einer Änderung der Menge des pro Zeiteinheit aus der Sanitärarmatur austretenden Wassers führt.

Es ist ebenfalls möglich, dass die Steuereinrichtung eine Umschalteinrichtung zum Umschalten zwischen verschiedenen Auslässen aus der Armatur enthält. Die Umschalteinrichtung kann in Weiterbildung mit dem gleichen Betätigungselement betätigt werden, mit dem auch die Mengensteuerung betätigt wird. Insbesondere kann vorgesehen sein, dass zur Betätigung der Umschalteinrichtung das Betätigungselement auch in der gleichen Weise betätigt wird wie zur Änderung der Mengeneinstellung. Beispielsweise kann eine Verdrehung über eine bestimmte Position hinaus zu einem Umschalten der Auslässe führen, wobei diese Position vorzugsweise in einer Position liegt, in der die mehreren Auslässe geschlossen sind. Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: einen Axialschnitt durch eine Kartusche nach der Erfindung;
- Fig. 2: einen Axialschnitt durch ein Verteilergehäuse;
- Fig. 3: einen Axialschnitt durch einen in dem Vertei- lergehäuse angeordneten Verteiler;
- Fig. 4: die Stirnansicht des Verteilers der Fig. 3;
- Fig. 5: einen zweiten Axialschnitt durch den Verteiler der Fig. 2 in einer anderen Ebene;
- Fig. 6: schematisch die Steuereinrichtung für eine erste Sanitärarmatur;
- Fig. 7: eine der Fig. 6 entsprechende Darstellung einer zweiten Sanitärarmatur;
- Fig. 8: eine Darstellung bei einer dritten Sanitär- armatur;
- Fig. 9: perspektivisch eine bewegbare Steuerscheibe;
- Fig. 10: perspektivisch eine Ansicht einer Verteiler- scheibe, wie sie bei der Armatur nach Fig. 7 Verwendung findet.

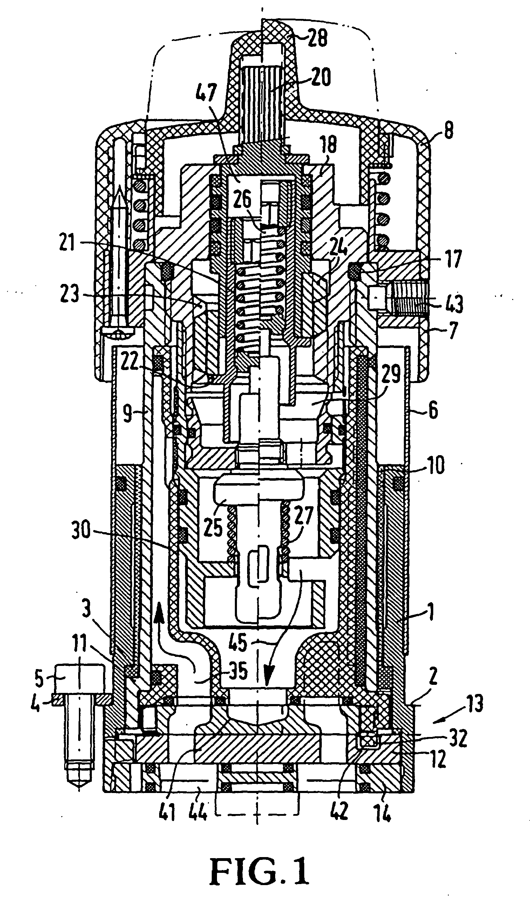

Fig. 1 zeigt in einem durch die Achse der Armatur gelegten Axialschnitt den Aufbau einer Kartusche nach der Erfindung. Die Kartusche enthält ein Kartuschengehäuse 1, das als zylindrische Hülse ausgebildet ist, die an der Außenseite und an der Innenseite je eine Schulter 2, 3 aufweist. Mit Hilfe der äußeren Schulter 2 lässt sich das Kartuschengehäuse 1 in einem Armaturenkörper festlegen, beispielsweise mit Hilfe einer Platte 4, die von einer Schraube 5 festgeschraubt wird. Dies ist schematisch links unten in Fig. 1 dargestellt. Das Kartuschengehäuse 1 ist von einer Schutzhülse 6 umgeben, die die Kartusche optisch abdeckt. Die Schutzhülse 6 reicht bis unter den Rand 7 eines Drehgriffs 8, der zur Betätigung der Kartusche dient.

In dem Kartuschengehäuse 1 ist drehbar ein Verteilergehäuse 9 gelagert, das als zylindrische Hülse ausgebildet ist. Zwischen dem Verteilergehäuse 9 und dem Kartuschengehäuse 1 ist ein Gleit- und Führungsring 10 eingesetzt. Die axiale Position des Verteilergehäuses 9 wird durch ein Anliegen einer Schulter 11 an der inneren Schulter 3 des Kartuschengehäuses 1 in der einen Richtung festgelegt. In der anderen Richtung geschieht die Festlegung dadurch, dass das Verteilergehäuse 9 auf einer feststehenden Steuerscheibe 12 aufliegt, die einen Teil einer Steuereinrichtung 13 der Kartusche bildet. Die feststehende Steuerscheibe 12 liegt auf einem Boden 14 auf, der am äußeren Ende des Kartuschengehäuses 1 axial gesichert ist.

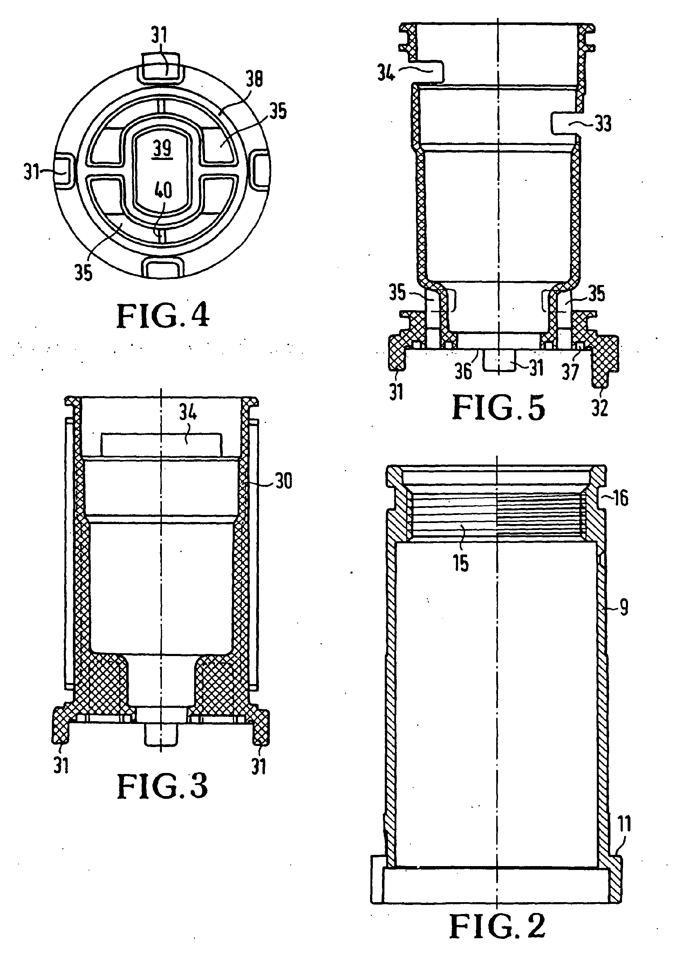

Einzelheiten des Verteilergehäuses 9 gehen aus Fig. 2 hervor. Das Verteilergehäuse 9 ist, wie bereits erwähnt, über den größten Teil seiner Längserstreckung als zylindrische Hülse ausgebildet, wobei an dem der Steuereinrichtung 13 zugeordneten Ende eine Durchmesservergrößerung vorhanden ist, die die bereits erwähnte Schulter 11 bildet.

An dem gegenüberliegenden Ende weist das Verteilergehäuse 9 ein Innengewinde 15 auf, das an einer Stelle angeordnet ist, wo das Verteilergehäuse 9 eine größere Wandstärke aufweist. Das Innengewinde 15 reicht nicht bis ganz zum Ende des Verteilergehäuses 9.

In der Außenseite des Verteilergehäuses 9 ist im Bereich des Gewindes 15 eine umlaufende Nut 16 eingeformt, die dazu dient, die axiale Position des Drehgriffs 8 zu bestimmen.

In das Innengewinde 15 des Verteilergehäuses 9 ist, siehe wieder die Fig. 1, unter Zwischenlage einer Dichtung 17 ein Einsatz 18 eingeschraubt, der sich bei Verdrehung des Verteilergehäuses 9 mit diesem mitdreht. Der Einsatz weist eine Lagerung auf, in der drehbar eine Drehspindel 19 gelagert ist. Die Drehspindel 19 ist axial gesichert und ragt mit einem verzahnten Ansatz 20 aus dem Einsatz 18 heraus. Die Drehspindel 19 ist innen hohl ausgebildet, und in diesem Hohlraum 47 ist ein Hülsenkörper 21 axial verschiebbar untergebracht. Der Hülsenkörper 21 weist an seiner Außenseite außerhalb der Drehspindel 19 einen nach außen gerichteten Flansch 22 auf.

Der Einsatz 18 enthält ein Innengewinde 23, mit dem ein Mutternelement 24 in Eingriff steht. Das Mutternelement 24 ist axial verschiebbar, aber drehgesichert auf der Außenseite der Drehspindel 19 geführt. Eine Verdrehung der Drehspindel 19 führt zu einer Verdrehung der Mutter 24, die wegen des Eingreifens in das Innengewinde 23 sich dann axial verschiebt und dabei auf dem Flansch 22 aufliegt.

In dem Hülsenkörper 21 ist ein Thermostat 25 untergebracht, der zwischen zwei Federn 26, 27 eingespannt ist. Die Feder 27 drückt den Thermostaten in den Hülsenkörper 21, so dass dieser ebenfalls in Richtung auf das in Fig. 1 obere Ende verschoben wird. Zum Verdrehen der Drehspindel 19 ist in dem Drehgriff 8 ein zweiter Griff 28 angeordnet, der mit dem verzahnten Ansatz 20 in Dreheingriff steht.

Der Thermostat 25 verschiebt einen Ventilkörper 29, der in bekannter Weise zwei ringförmige Schlitze als Ventilsitze öffnet und schließt. Der Thermostat 25 ist mit seinem Ventilkörper 29 und den zugeordneten Ventilsitzen in einem Käfig angeordnet, der innerhalb eines Verteilers 30 befestigt ist. Dieser Verteiler 30 bildet Wasserführungen, die das in die Kartusche eintretende Wasser zu dem Thermostat 25 führen und von diesem auch wieder zu der Steuereinrichtung 13. Einzelheiten des Verteilers gehen aus den Figuren 3 bis 5 hervor, auf die jetzt Bezug genommen wird.

Der Verteiler 30 ist etwa hülsenförmig aufgebaut und so dimensioniert, dass er unter Zwischenlage einer Dichtung in das Verteilergehäuse 9 von unten in Fig. 2 her eingeschoben werden kann. An seinem der Steuereinrichtung 13 zugeordneten Ende enthält er vier axiale Ansätze 31, von denen ein Einsatz 32 etwas länger ausgebildet ist als die drei anderen.

In seinem zylindrischen Bereich enthält der Verteiler 30 zwei Schlitze 33, 34, die an unterschiedlichen axialen Positionen angeordnet sind. Sie dienen dazu, dass das einströmende Wasser zu dem Thermostaten 25 gelangt. Einer der beiden Schlitze ist für das kalte Wasser und der andere für das warme Wasser bestimmt.

Von dem der Steuereinrichtung 13 zugeordneten Ende führen zwei Kanäle 35 von der Stirnseite 36 aus zu der Außenseite des Verteilers 30. Diese beiden Kanäle sind durch eine äußere Unterteilung voneinander getrennt. In der Stirnseite 36 sind Nuten 37 ausgebildet, in die eine Formdichtung 38 eingelegt wird. Diese Formdichtung ist in Fig. 4 zu sehen. Dort ist auch zu sehen, dass durch eine zentrale Öffnung 39 Zugang in das Innere des Verteilers 30 hergestellt wird, während die beiden Kanäle 35 durch Querwände 40 voneinander getrennt sind.

Der Verteiler wird in dem Innern des Verteilergehäuses 9 angeordnet, und im Innern des Verteilers 30 der Thermostat 25. Dann wird auf die Stirnseite 36 des Verteilers 30 eine in Fig. 1 zu sehende verdrehbare Steuerscheibe 41 unter Zwischenlage der Dichtung 38 aufgelegt. Die korrekte Drehposition dieser bewegbaren Steuerscheibe 41 wird durch Kerben unterschiedlicher Breite gewährleistet, die mit den Vorsprüngen 31 des Verteilers 30 zusammenwirken. Auf die verdrehbare Steuerscheibe 41 wird dann die feststehende Steuerscheibe 12 aufgelegt, deren korrekte Position ebenfalls durch Kerben unterschiedlicher Breite in ihrem Außenumfang gewährleistet wird. Der verlängerte Ansatz 32 des Verteilers 30 kommt dann in eine bogenförmige Nut 42 der feststehenden Steuerscheibe 12 zu liegen, wodurch eine Drehwinkelbegrenzung für die Verdrehung der Steuerscheibe bewirkt wird. Die Nut 42 erstreckt sich nur über einen Teil eines Bogens, beispielsweise über 90 Grad.

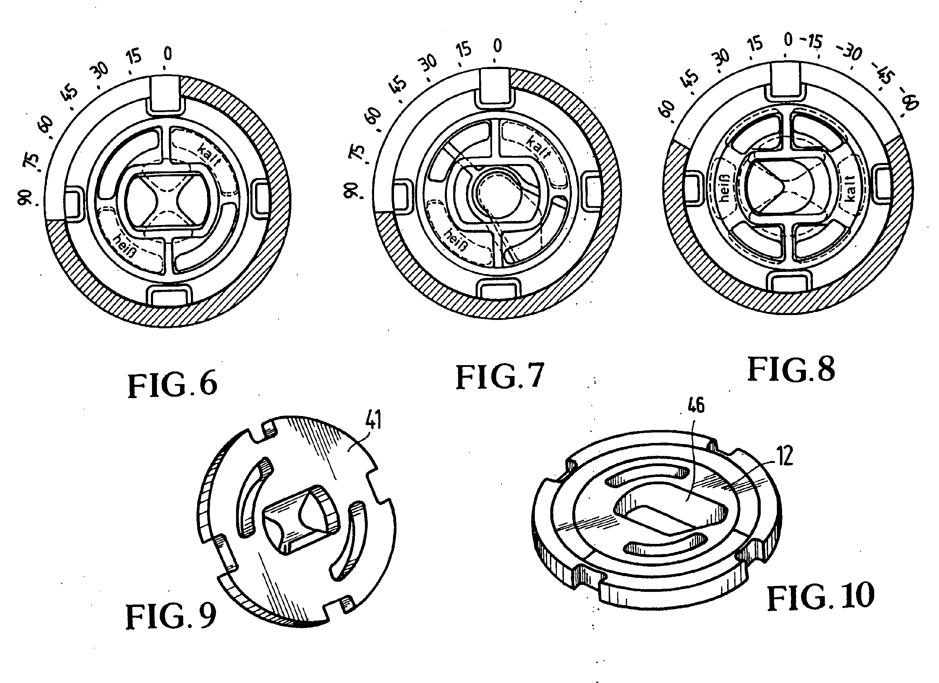

Der Drehgriff 8 wird mit Hilfe einer Schraube 43 an dem Verteilergehäuse 9 festgeschraubt. Die Schraube 43 greift mit ihrem nach innen gerichteten Ende in die Nut 16 ein. Dadurch ist die axiale Position des Drehgriffs 8 festgelegt. Eine Verdrehung des Drehgriffs 8 führt zu einer Verdrehung des Verteilergehäuses 9 und damit zu einer Verdrehung des Verteilers 30, der seinerseits die verdrehbare Steuerscheibe 41 mitnimmt. Der Boden 14 der Kartusche weist mehrere Öffnungen 44 auf, ebenso die feststehende Steuerscheibe 12 und die verdrehbare Steuerscheibe 41. Je nach Position der verdrehbaren Steuerscheibe 41 kann das Wasser durch die Kanäle 35 in das Verteilergehäuse und in Richtung des Pfeiles 45 wieder aus dem Verteilergehäuse heraus gelangen. Durch Auswechseln der verdrehbaren Steuerscheibe 41, der feststehenden Steuerscheibe 12 und/oder des Bodens 14 kann die Charakteristik der Kartusche an die unterschiedlichen Anwendungsfälle angepasst werden. Beispiele für einige der mögliche Arten von Sanitärarmaturen sind in den Figuren 6 bis 8 dargestellt.

Figur 6 zeigt eine Anordnung, bei der sowohl in der feststehenden als auch in der verdrehbaren Steuerscheibe jeweils zwei bogenförmige Schlitze als Durchgangsöffnungen vorhanden sind. Der Verteiler kann um einen Winkel verdreht werden. Mit zunehmender Verdrehung wird der Querschnitt der Einlassöffnungen und der Auslaßöffnungen weiter vergrößert, so dass diese Drehbewegung eine Mengensteuerung darstellt. Die zugehörige verdrehbare Steuerscheibe 41 ist in Fig. 9 dargestellt. Die in Fig. 9 zu sehende Seite ist die in Fig. 1 obere Seite.

Fig. 7 zeigt eine Anordnung, mit der ein Auslass in seiner Menge und in seiner Temperatur gesteuert werden kann. Hierbei wird bei Öffnen des Ventils zunächst kaltes Wasser über einen Bypass ausgegeben, während bei zunehmender Öffnung gleichzeitig auch die Temperatur des Wassers ansteigt.

Fig. 8 zeigt eine Möglichkeit, bei der ausgehend von einer Mittelstellung durch Verdrehen nach rechts ein erster Auslass geöffnet wird, während eine Verdrehung aus der geschlossenen Position nach links einen zweiten Auslass öffnet.

Fig. 10 zeigt perspektivisch die Steuerscheibe der Sanitärarmatur der Fig. 7. Hierbei weist die feststehende Steuerscheibe 12 eine Auslassöffnung 46 auf, die unsymmetrisch ist, um dadurch einen Bypass zu bilden.

## Patentansprüche

1. Kartusche für Sanitärarmaturen, mit
einem Kartuschengehäuse (1), einem Thermostat,
einem das Kartuschengehäuse (1) abschließenden Boden (14),
einem Verteilergehäuse (9), das
drehbar in dem Kartuschengehäuse (1) gelagert ist, sowie mit einer Steuereinrichtung (13) zur Steuerung der Menge des die Armatur verlassenden Wassers, die
durch Verdrehen des Verteilergehäuses (9) betätigbar ist und zur Anpassung der Kartusche an unterschiedliche Aufgaben und/oder zur Anpassung der Charakteristik an unterschiedliche Anwendungsfälle mindestens teilweise auswechselbar ist, wobei
in dem Verteilergehäuse (9) ein Verteiler (30) mit an seiner Außenseite durch Querwände (40) getrennten Kanälen (35) für das kalte und warme Wasser angeordnet ist, aus denen das Wasser durch an unterschiedlichen axialen Positionen angeordnete Schlitze (33, 34) in der Wand des Verteilers (30) zum Thermostat (25) gelangt.

2. Kartusche nach Anspruch 1, bei der der Boden (14) auswechselbar ist.

3. Kartusche nach Anspruch 1 oder 2, mit einem die Drehbewegung des Verteilergehäuses (9) begrenzenden Anschlag, der mit einem austauschbaren Teil der Steuereinrichtung (13) zusammenwirkt.

4. Kartusche nach einem der vorhergehenden Ansprüche, mit einem in dem Verteilergehäuse (9) angeordneten Thermostat (25).

5. Kartusche nach einem der vorhergehenden Ansprüche, mit einem in dem Verteilergehäuse (9) angeordneten Verteiler (30), der Wasserführungen von der Steuereinrichtung (13) zu dem Thermostat (25) und von diesen zurück zu der Steuereinrichtung (13) bildet.

6. Kartusche nach einem der vorhergehenden Ansprüche, bei der das Wasser axial in die Kartusche gelangt und diese axial verlässt.

7. Kartusche nach einem der vorhergehenden Ansprüche, bei der die Steuereinrichtung (13) eine Scheibensteuerung aufweist.

8. Kartusche nach Anspruch 7, bei der die bewegbare Steuerscheibe (41) um eine feste Achse verdrehbar ist.

9. Kartusche nach einem der vorhergehenden Ansprüche, bei der die Steuereinrichtung (13) eine Mengensteuerung ist.

10. Kartusche nach einem der vorhergehenden Ansprüche, bei der die Steuereinrichtung (13) eine Umschalteinrichtung zwischen verschiedenen Auslässen aufweist bzw. bildet.

## Claims

1. A cartridge for sanitary fittings, with
a cartridge casing (1), a thermostat,
a base (14) closing the cartridge casing (1), a distributor casing (9) that
is mounted rotatably inside the cartridge casing (1), as well as a control device (13) for controlling the amount of the water exiting the fitting, which
can be actuated by rotating the distributor casing (9) and is exchangeable at least partially to adjust the cartridge to different tasks and/or to adjust the characteristic to different applications, wherein,
in the distributor casing (9), a distributor (30) with ducts (35) is separated by transverse walls (40) on its external side from which cold and hot water flow in through the slits (33, 34), disposed at different axial positions in the wall of the distributor (30), to the thermostat (25).

2. The cartridge according to Claim 1, wherein the base (14) is exchangeable.

3. The cartridge according to Claim 1 or 2, with a limit stop that limits the rotary motion of the distributor casing (9) and interacts with an exchangeable part of the control device (13).

4. The cartridge according to one of the preceding claims, with a thermostat (25) disposed inside the distributor casing (9).

5. The cartridge according to one of the preceding claims, with a distributor (30), disposed inside the distributor casing (9), which forms water passages from the control device (13) to the thermostat (25) and from the latter back to the control device (13).

6. The cartridge according to one of the preceding claims, wherein the water enters axially into the cartridge and exits the latter axially.

7. The cartridge according to one of the preceding claims, wherein the control device (13) features a disc control means.

8. The cartridge according to Claim 7, wherein the movable control disc (41) is rotatable about a fixed axis.

9. The cartridge according to one of the preceding claims, wherein the control device (13) is a volumetric controller.

10. The cartridge according to one of the preceding claims, wherein the control device (13) features or forms a switchover device between different outlets.

## Revendications

1. Cartouche pour robinetteries sanitaires, comprenant
un corps (1) de cartouche, un thermostat,
un fond (14) terminant le corps (1) de cartouche,
un corps (9) distributeur,
reposant dans le corps (1) de cartouche de façon à pouvoir tourner, ainsi que comprenant
un dispositif de commande (13) servant à piloter le débit de l'eau qui sort par la robinetterie, dispositif qui
est actionnable en tournant le corps (9) distributeur et qui est au moins en partie interchangeable afin d'adapter la cartouche à différentes tâches et/ou d'adapter la courbe caractéristique à différents cas d'application, sachant que
dans le corps (9) distributeur a été agencé un distributeur (30) comportant sur son côté extérieur des canaux (35) pour l'eau froide et l'eau chaude séparés par des parois transversales (40), canaux depuis lesquels
l'eau parvient au thermostat (25) après avoir traversé des fentes (33, 34) agencées selon différentes positions axiales dans la paroi du distributeur (30).

2. Cartouche selon la revendication 1, dont le fond (14) est interchangeable.

3. Cartouche selon la revendication 1 ou 2, comprenant une butée limitant le mouvement rotatif du corps (9) distributeur, butée qui interagit avec une pièce interchangeable du dispositif de commande (13).

4. Cartouche selon l'une des revendications précédentes, comprenant un thermostat (25) agencé dans le corps (9) distributeur.

5. Cartouche selon l'une des revendications précédentes, comprenant un distributeur (30) agencé dans le corps (9) distributeur, lequel distributeur crée des circuits d'eau allant du dispositif de commande (13) au thermostat (25) et revenant de ce dernier vers le dispositif de commande (13).

6. Cartouche selon l'une des revendications précédentes, dans laquelle l'eau pénètre axialement et de laquelle l'eau sort axialement.

7. Cartouche selon l'une des revendications précédentes, dans laquelle le dispositif de commande (13) présente une commande à disque.

8. Cartouche selon la revendication 7, dans laquelle le disque de commande (41) déplaçable peut tourner autour d'un axe fixe.

9. Cartouche selon l'une des revendications précédentes, dans laquelle le dispositif de commande (13) est une commande quantitative.

10. Cartouche selon l'une des revendications précédentes, dans laquelle le dispositif de commande (13) présente et/ou forme un dispositif de commutation entre différents orifices de sortie.
